**Europäisches Patentamt**

**European Patent Office**

**Office européen des brevets**

(19)

(11) Veröffentlichungsnummer: **0 190 599**

**B1**

(12)

# EUROPÄISCHE PATENTSCHRIFT

(45) Veröffentlichungstag der Patentschrift:
**21.09.88**

(21) Anmeldenummer: **86100735.9**

(22) Anmeldetag: **21.01.86**

(51) Int. Cl.⁴: **C 02 F 1/42**

(54) **Gerät zum Behandeln, insbesondere Enthärten und/oder Vollentsalzen von Wasser.**

(30) Priorität: **05.02.85 DE 3503768**

(43) Veröffentlichungstag der Anmeldung:
**13.08.86 Patentblatt 86/33**

(45) Bekanntmachung des Hinweises auf die Patenterteilung:
**21.09.88 Patentblatt 88/38**

(84) Benannte Vertragsstaaten:
**AT BE CH FR GB IT LI NL SE**

(56) Entgegenhaltungen:
**DE-A-3 248 126**
**FR-A-995 978**
**FR-A-2 427 121**
**US-A-2 841 286**
**US-A-3 321 085**

(73) Patentinhaber: **Alhäuser, Erich, Am Hölzeberg 2,
D-5412 Ransbach- Baumbach (DE)**

(72) Erfinder: **Alhäuser, Erich, Am Hölzeberg 2, D-5412
Ransbach- Baumbach (DE)**

(74) Vertreter: **Beyer, Werner, Dipl.- Ing.,
Patentanwälte Dipl.- Ing. Werner Beyer Dipl.-
Wirtsch.- Ing. Bernd Jochem Staufenstrasse 36
Postfach 17 01 45, D-6000 Frankfurt/Main (DE)**

EP 0 190 599 B1

## Beschreibung

Die Erfindung betrifft ein Gerät zum Behandeln, insbesondere Enthärten und/oder Vollentsalzen von Wasser im Durchlauf, bestehend aus einem Wandhalter und einem von diesem in aufrechter Stellung erfaßbaren, mit einer Behandlungsmasse gefüllten Patrone mit einer unteren Anschlußöffnung für die Zuleitung des zu behandelnden Wassers und einer oberen Anschlußöffnung für eine offen endende Abflußleitung.

Ein solches Gerät ist aus der DE-A-2 823 432 bekannt.

Bei dem bekannten Gerät, das zur Verwendung als Filtervorrichtung beispielsweise in Autowerkstätten, chemischen Labors, Apotheken usw. vorgesehen ist, um bei Bedarf reines Wasser zur Verfügung zu haben, wird an der oberen Anschlußöffnung der Patrone vor oder nach dem Einsetzen in die Halterung ein besonderer Anschlußstutzen angebracht, der an seinem in die Patrone hineinragenden Endstück ein Lamellenfilter und an seinem äußeren Ende einen Leitwertmesser trägt. An den Anschlußstutzen ist eine Abflußleitung in Gestalt eines offen endenden Schlauchs angeschlossen, aus dem das behandelte Wasser austritt, wenn der Zulauf zur Patrone über den unteren Anschluß geöffnet wird. Beim Patronenwechsel muß deshalb außer dem Lösen und Wiederanschließen der Zuleitung am unteren Patronenanschluß und der Herausnahme der Patrone aus der Halterung und der Wiedereinsetzung einer neuen Patrone in dieselbe auch der Anschlußstutzen am oberen Anschluß entfernt und in die neue Patrone eingesetzt werden, was umständlich und zeitraubend ist und vor allem dann besondere Geschicklichkeit erfordert, wenn der im Anschlußstutzen enthaltene Leitwertmesser aus dem Netz über ein Kabel gespeist wird. Wird hierzu der Stecker aus der Wandsteckdose gezogen, besteht die Gefahr, daß das erneute Einstecken des Steckers versäumt wird und dadurch unbemerkt die Leitwertüberwachung unterbleibt.

Der Erfindung liegt deshalb die Aufgabe zugrunde, ein Gerät der eingangs genannten Art dahingehend auszubilden, daß der Patronenwechsel wesentlich vereinfacht wird und bei an das Netz anschließbaren Leitwertmesser eine ständige Überwachung des Leitwerts gewährleistet ist.

Erfindungsgemäß wird diese Aufgabe dadurch gelöst, daß die Abflußleitung wenigstens teilweise von einem Kanal innerhalb des Wandhalters gebildet ist und daß der Wandhalter mechanische Halte- und Dichtungsmittel zur hängenden Halterung der Patrone an deren oberem Ende und zur dichtenden Verbindung der oberen Anschlußöffnung mit dem Kanal im Wandhalter aufweist.

Es leuchtet ein, daß bei dem erfindungsgemäßen Gerät außer dem Lösen und Wiederanschließen der Zuleitung nur noch die Patrone vom Wandhalter entfernt und eine neue Patrone an diesen angebracht werden muß, wobei die Abflußleitung von selbst von der Patrone gelöst bzw. wieder mit dieser verbunden wird.

Nach einem ersten Merkmal zur vorteilhaften Ausgestaltung der Erfindung ist der Wandhalter als gehäuseartiges Bauteil ausgebildet, das sich im wesentlichen oberhalb der Patrone über diese hinwegerstreckt und einen an die Halte- und Dichtungsmittel anschließenden, hauptsächlich horizontalen Kanalabschnitt aufweist, der zu einer nach abwärts gerichteten Ausflußtülle vor der Patrone führt. Ein solcher Wandhalter ist insbesondere zur Herstellung aus Kunststoff geeignet und dadurch nicht nur billig in der Herstellung, sondern auch korrosionsbeständig und läßt sich leicht sauber halten. Außerdem läßt sich bei einem derartigen Wandhalter der hauptsächlich horizontal verlaufende Kanalabschnitt mühelos zur Anschlußtülle hin leicht geneigt ausbilden, um ein unerwünschtes Stehenbleiben des behandelten Wassers in diesem Abschnitt zu verhindern.

Die vorstehende Ausgestaltung des erfindungsgemäßen Geräts hat in Verbindung mit einer Leitwertmeßeinrichtung in der Abflußleitung den weiteren Vorteil, daß die Leitwertmeßeinrichtung auf einfache Weise innerhalb des gehäuseartigen Bauteils angeordent wird und mit ihrer Elektrode bzw. ihren Elektroden in den hauptsächlich horizontalen Kanalabschnitt ragen kann, wobei es weiterhin zweckmäßig ist, den hauptsächlich horizontalen Kanalabschnitt stromabwärts von der Elektrode bzw. den Elektroden mit einem Stauorgan zu versehen, das bei abströmendem Wasser für eine ausreichende Umspülung der Elektrode bzw. der Elektroden sorgt.

Nach einem anderen Merkmal zur vorteilhaften Ausgestaltung der Erfindung sind die Halte- und Dichtungsmittel von Elementen eines Schraub- oder Bajonettverschlusses und einem Dichtring gebildet, gegen den die obere Öffnungskante der Patrone mit Hilfe des Schraub- bzw. Bajonettverschlusses in dichtende Anlage gelangt. Ein solcher Schraub- oder Bajonettverschluß ist einfach und schnell zu handhaben und bildet dennoch Gewähr für eine sichere Halterung und Abdichtung der Patrone im Betrieb.

Noch ein weiteres Ausgestaltungsmerkmal der Erfindung sieht vor, daß der die Abflußleitung bildende Kanal einen durch die obere Anschlußöffnung in die Patrone eintauchenden Rohrstutzen von wesentlich geringerem Außendurchmesser als die Innenweite der Anschlußöffnung der Patrone zur Bildung eines ringförmigen Luftpolsters zwischen seiner Außenseite und der Patronenwandung aufweist. Durch dieses Luftpolster wird verhindert, daß beim Lösen der Patrone vom Wandhalter das aus dem Wandhalter nachströmende Wasser über den Rand der oberen Patronenöffnung ausfließt.

Die vorstehende Ausführungsform der Erfindung kann mit Vorteil außerdem noch dahingehend weiter ausgebildet werden, daß an dem Wandhalter eine den Rohrstutzen umschließende Schraubendruckfeder fest angebracht ist, von welcher ein in der Patrone verschieblicher Druckkolben zum Ausgleich der betrieblichen Volumenänderung der Behandlungsmasse belastbar ist. Dieser Kolben kann entweder als auf dem Rohrstutzen geführter Ringkolben ausgebildet sein, der am Rohrstutzen durch einen Bund an dessen unterem Ende gesichert ist, oder als Scheibenkolben, der beim Patronenwechsel innerhalb der Patrone verbleibt. Dadurch werden gegenüber Patronen mit darin enthaltener Druckfeder, die mit Rücksicht auf die Korrosionsbeständigkeit aus rostfreiem Stahl bestehen sollte, die Kosten erheblich gesenkt.

Anstelle des das ringförmige Luftpolster bildenden Rohrstutzens kann nach einem alternativen Ausgestaltungsmerkmal der Erfindung auch an dem Wandhalter innerhalb der Halte- und Dichtungsmittel ein in die Patrone eintauchender Verdrängungskörper von geringerem Querschnitt als die obere Anschlußöffnung der Patrone angeordnet sein, der beim Entfernen der Patrone vom Wandhalter ein ausreichendes Volumen innerhalb des oberen Patronenendes zur Aufnahme des aus dem Wandhalter nachströmenden Wassers freigibt.

Die Erfindung wird nachstehend anhand der Zeichnung näher erläutert. Es zeigen:

Fig. 1 einen senkrechten Schnitt durch ein erfindungsgemäß ausgebildetes Gerät zum Behandeln von Wasser im Durchlauf,

Fig. 2 eine Stirnansicht des Wandhalters bei dem Gerät nach Fig. 1,

Fig. 3 einen Querschnitt durch den Wandhalter nach Linie III-III in Fig. 1,

Fig. 4 eine Draufsicht auf den Wandhalter bei abgenommenem Deckel,

Fig. 5 eine Draufsicht auf den Kanaleinsatz des Wandhalters,

Fig. 6 einen Ausschnitt aus Fig. 1 mit einer abgeänderten Ausführung des Geräts im Bereich des Patronenanschlusses am Wandhalter,

Fig. 7 den gleichen Ausschnitt wie in Fig. 6 mit einer weiteren Abänderung gegenüber Fig. 1 und

Fig. 8 den gleichen Ausschnitt wie in Fig. 6 mit noch einer weiteren Abänderung gegenüber Fig. 1.

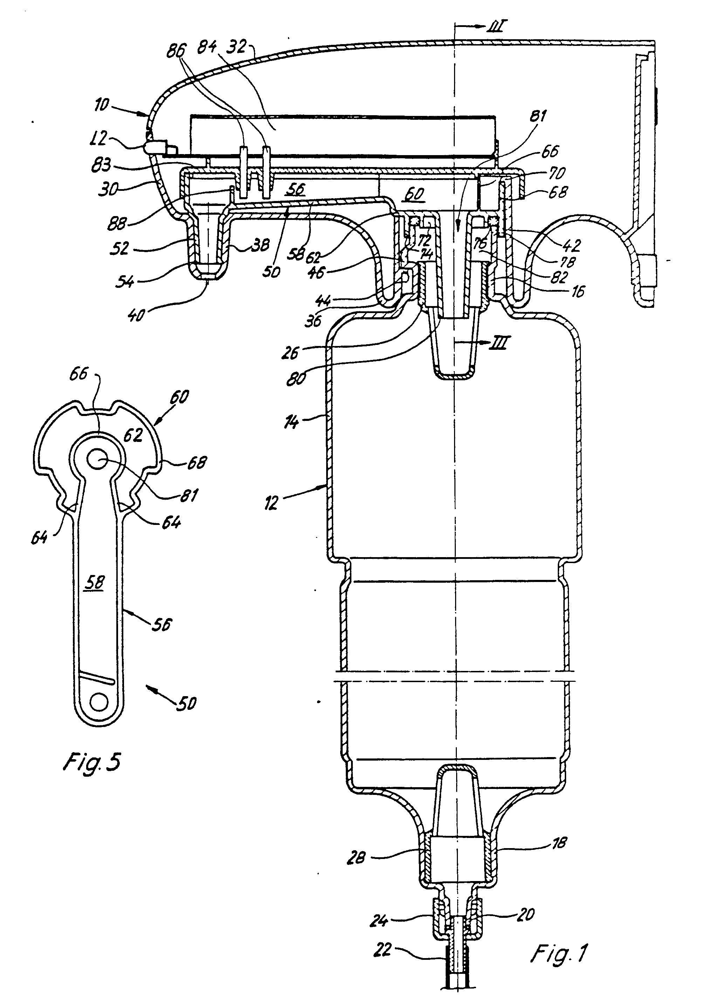

Das in Fig. 1 in seiner Gesamtheit dargestellte Gerät besteht aus zwei Hauptteilen, nämlich einen Wandhalter 10 und einer auswechselbar in diesen eingesetzten und gehalterten Patrone 12.

Die Patrone 12 hat ein im wesentlichen zylindrisches Gehäuse 14, das sich am oberen Ende zu einem offen endenden Halsteil 16 und am unteren Ende zu einem Halsteil 18 mit einem Schlauchanschluß 20 verjüngt. An den Schlauchanschluß 20 ist ein Schlauch 22 mit einem Kupplungsteil 24 zur Zuleitung des zu behandelnden Wassers lösbar angeschlossen.

Die Patrone 12 ist mit einer nicht gezeigten Behandlungsmasse wie beispielsweise einem Ionenaustauscherharz gefüllt. In die Halsteile 16, 18 eingepreßte Filterbuchsen 26, 28 hindern die Behandlungsmasse am Austreten durch die Patronenöffnungen.

Der Wandhalter 10 besteht aus einem vorzugsweise aus Kunststoff gefertigten Gehäuse mit einem Unterteil 30 und einem abnehmbaren Oberteil oder Deckel 32. Zur Befestigung an der Wand ist das Unterteil 30 an seiner Rückseite mit Löchern 34 versehen, durch welche bei abgenommenem Deckel (nicht gezeigte) Befestigungsschrauben hindurchgeführt werden können.

Während der Gehäusedeckel 32 eine glatte gewölbte Gestalt aufweist, ist das Gehäuseunterteil an der Unterseite mit einem seiner Rückseite näheren größeren kragenförmigen Ansatz 36 und einem dem vorderen Gehäuseende benachbarten kleineren kragenförmigen Ansatz 38 versehen. Der kleinere Ansatz 38 ist leicht konisch ausgebildet und an seinem halbkugelig gestalteten Ende mit einer Öffnung 40 versehen. Der größere kragenförmige Ansatz 36 ist doppelwandig ausgebildet und nimmt mit seinem sich aufwärts erstreckenden inneren zylindrischen Wandungsteil 42 den oberen Halsteil 16 der Patrone 12 auf, wenn diese in den Wandhalter 10 eingesetzt ist. Zur Halterung der Patrone 12 im kragenförmigen Ansatz 36 dienen radial nach einwärts gerichtete Vorsprünge 44 an der inneren Wand 42 des kragenförmigen Ansatzes 36, die zusammen mit radial nach auswärts gerichteten Vorsprüngen 46 am oberen Halsteil 16 der Patrone 12 einen Bajonettverschluß von grundsätzlich bekannter Gestalt bilden.

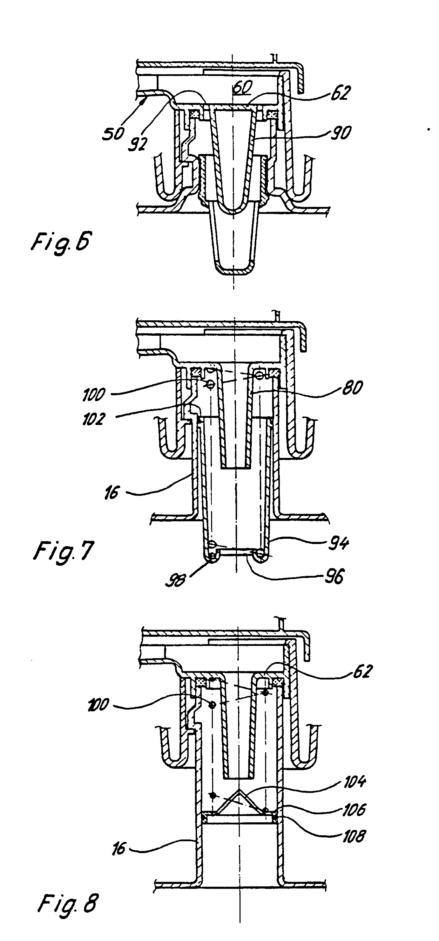

In das Gehäuseunterteil 30 ist ein Kanaleinsatz 50 eingefügt, dessen Gestalt aus Fig. 5 in Verbindung mit Fig. 1 ersichtlich ist. Der Kanaleinsatz 50 hat einen tüllenförmigen Ansatz 52, der in den kragenförmigen Ansatz 38 des Gehäuseunterteils 30 bündig eingreift und mit einer ringförmigen Verdickung 54 am unteren Ende dabei in eine Ringnut im kragenförmigen Ansatz 38 einrastet. Von dem tüllenförmigen Ansatz 52 des Kanaleinsatzes 50 führt ein Rinnenteil 56 mit einer leicht ansteigenden Bodenwand 58 zu einem Endteil 60 mit einer tiefer als das dortige Ende der Bodenwand 58 gelegenen horizontalen Wand 62, auf der sich die Seitenwände 64 des Rinnenteils 56 zunächst konvergierend und dann in einer inneren Ringwand 66 endend fortsetzen.

Die horizontale Wand 62 des Endteils 60 am Kanaleinsatz 50 ist wesentlich größer als der von der inneren Ringwand 66 umschlossene Bereich ausgebildet und an ihrem unregelmäßig gestalteten Außenumfang oberseitig durch eine an die Seitenwände des Rinnenteils 58 anschließende äußere Ringwand 68 abgeschlossen, deren Oberkante hinter eine wulstförmige Verdickung 70 am oberen Ende der inneren zylindrischen Wand 42 des kragenförmigen Ansatzes 36 am Gehäuseunterteil 30 einrastet. Die zylindrische Wand 42 endet hierzu auf dem größten Teil ihres Umfangs oberhalb des Kanaleinsatzes 50 und enthält nur dort, wo sich der rinnenförmige Kanalteil 56 nach auswärts erstreckt, eine Aussparung für denselben.

Die horizontale Wand 62 des Endteils 60 trägt an ihrer Unterseite zwei konzentrische Ringkragen 72, 74 zur Aufnahme einer Ringdichtung 76, gegen welche die Oberkante 78 des Halsteils 16 der Patrone 12 mit Hilfe der bajonettverschlußartigen Verbindung der Patrone mit dem Wandteil dichtend anliegt. Es leuchtet ein, daß anstelle der bajonettverschlußartigen Verbindung auch eine Gewindeverbindung vorgesehen sein kann.

Die horizontale Wand 62 enthält ferner innerhalb der Ringwand 66 eine von einem angeformten Rohrstutzen 80 umschlossene Öffnung 81. Der Rohrstutzen 80 erstreckt sich beim dargestellten Ausführungsbeispiel über die Unterkante des kragenförmigen Ansatzes 36 am Gehäuseunterteil 30 nach unten hinaus und ragt bei eingesetzter Patrone 12 weit in deren Halsteil 16 hinein. Dadurch wird im Halsteil 16 der in den Wandhalter 10 eingesetzten Patrone 12 ein nach oben abgeschlossener Ringraum 82 geschaffen, in welchem sich beim Durchfließen der Patrone mit Wasser ein Luftpolster zu einem später beschriebenen Zweck bildet.

Der Kanaleinsatz 50 ist an der Oberseite durch einen Deckel 83 abgeschlossen. Der Deckel 83 dient zugleich als Träger einer an sich bekannten Leitwertmeßeinrichtung 84, die im Beispielsfall mit zwei Elektroden 86 versehen und im übrigen nicht weiter dargestellt ist. Die Elektroden 86 sind durch den Deckel 83 hindurchgeführt und ragen in den rinnenförmigen Kanalteil 56, um dort von dem bei der Wasserentnahme hindurchtretenden behandelten Wasser umspült zu werden. Um hierfür im Kanalteil 56 eine ausreichende Wasserhöhe auch bei stark gedrosselter Wasserentnahme herzustellen, enthält der Kanalteil 56 stromabwärts von den Elektroden 86 ein Stauorgan 88 in Gestalt einer von einer der Seitenwände 64 ausgehenden und mit Abstand zu der anderen Seitenwand endenden Querwand, die bis zur Bodenwand 58 des Kanalteils 56 reicht.

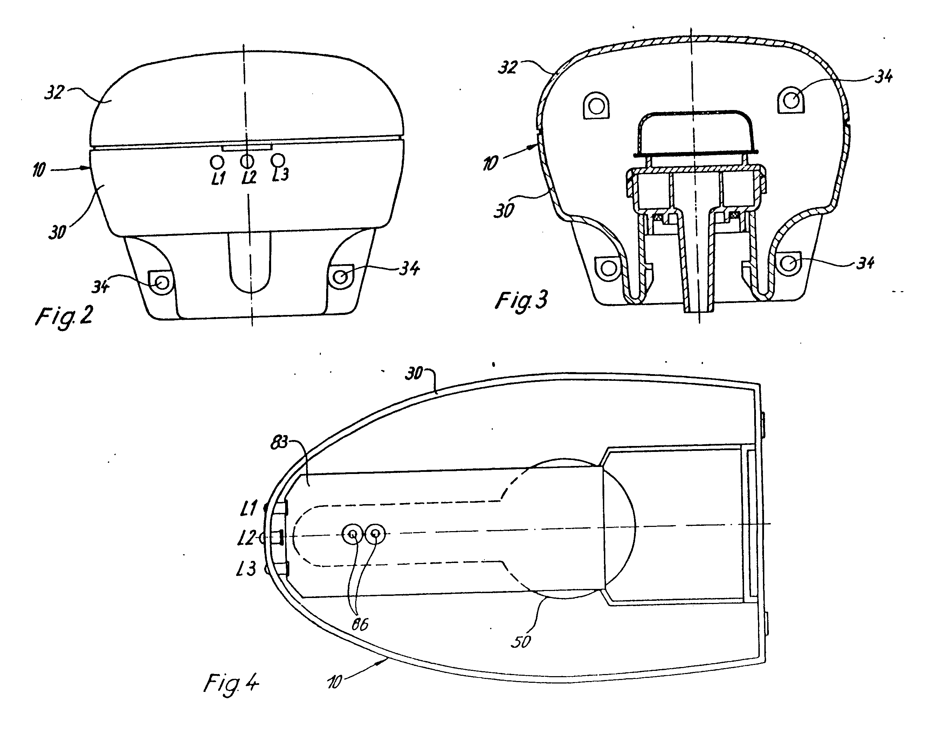

Die Leitwertmeßeinrichtung wird in bekannter Weise von einer Batterie oder dem Netz am Aufstellungsort des Geräts über ein (nicht gezeigtes) Kabel betrieben, das an geeigneter Stelle aus dem Wandhalter herausgeführt und mit einem Stecker zum Einstecken in eine Steckdose versehen ist. Zur Kenntlichmachung des gemessenen Leitwerts können beispielsweise, wie aus Fig. 1 und 2 ersichtlich, drei Leuchtdioden L1, L2, L3 an den beiden Stirnenden des Gehäuseunterteils 30 angeordnet sein, die verschiedene Leitwertzustände wie z. B. $< 5\,\mu S$, $< 20\,\mu S$ und $> 20\mu S$ ( = "Patrone auswechseln") anzeigen.

Die Wirkungsweise des dargestellten und beschriebenen Geräts bedarf keiner besonderen Erklärung. Wenn sich die Patrone 12 beim ersten Öffnen der Wasserzufuhr über den Schlauch 22 mit Wasser gefüllt hat und dieses durch den Rohrstutzen 80 bis in den Endteil 60 des Kanaleinsatzes 50 angestiegen ist, fließt das in der Patrone behandelte Wasser infolge der Schräglage der Bodenwand 58 von selbst zu dem von dem kragenförmigen Ansatz 38 und dem tüllenförmigen Ansatz 52 gebildeten Geräteauslaß, wo es von der Bedienungsperson in einem Gefäß oder dergleichen aufgefangen wird. Selbstverständlich kann an diesen Auslaß auch ein Schlauch zur Weiterleitung des behandelten Wassers angeschlossen werden. Wird die Wasserzufuhr abgesperrt, fließt noch soviel Wasser nach, bis das Wasser im Endteil 60 bis auf die Höhe der anschließenden Bodenwand 58 des Rinnenteils 56 abgesunken ist. Wenn nun die dritte Leuchtdiode L3 aufleuchtet und einen Leitwert von $> 20\,\mu S$ anzeigt, bedeutet dies, daß das Ionenaustauschvermögen des Harzes in der Patrone 12 erschöpft ist und die Patrone ausgewechselt werden muß. Hierzu genügt es, die Patrone 12 um einen geringen Winkel zur Lösung des Bajonettverschlusses zu drehen und die Patrone 12 aus dem Wandhalter 10 nach unten herauszuziehen. Hierauf wird die Patrone unter Beibehaltung ihrer aufrechten Stellung über einen Ausguß oder ein sonstiges Gefäß gebracht und dort das Kupplungsstück 24 des Schlauchs 22 vom Schlauchanschluß 20 entfernt, wobei das in der Patrone enthaltene Wasser in den Ausguß bzw. das Gefäß abfließt.

Beim Herausziehen der Patrone 12 aus dem Wandhalter 10 strömt durch den Rohrstutzen das in diesem und dem Endteil 60 oberhalb des Halsteils 16 enthaltene Wasser nach. Dennoch wird diese Wassermenge nicht zu einem Überlaufen der Patrone führen, weil für diese Wassermenge durch das oben erwähnte Luftpolster ein ausreichendes Auffangvolumen innerhalb der Patrone zur Verfügung steht.

Das Anschließen und Einsetzen einer neuen Patrone in den Wandhalter erfolgt in umgekehrter Weise.

Fig. 6 zeigt eine abgeänderte Ausführung der Mittel zum Verhindern des Überlaufens der Patrone beim Herausnehmen aus dem Wandhalter. Anstelle des das Auffangvolumen für die nachströmende Wassermenge bildenden Luftpolsters im Ringraum 82 bei dem zuvor beschriebenen Ausführungsbeispiel ist bei der Ausführungsform nach Fig. 6 die Bodenwand 62 des Endteils 60 am Rinneneinsatz 50 im Zentrum geschlossen und mit einem zapfenförmigen Verdrängungskörper 90 versehen, um welchen ein Kranz von Öffnung 92 in der Bodenwand 62 angeordnet ist. Es leuchtet ein, daß der Verdrängungskörper 90 dieselbe Wirkung wie das Luftpolster 82 hat und ein ausreichendes Auffangvolumen im Halsteil 16 der Patrone 12 für das bei der Abnahme vom Wandhalter 10 nachströmende Wasser schafft.

Die erfindungsgemäße Ausbildung der Halte- und Dichtungsmittel für die Patrone 12 im Wandhalter 10 ermöglicht mit einfachen Mitteln eine wirksame Anpassung des Aufnahmevolumens der Patrone an die darin enthaltene Austauschermasse, die bei längerem Gebrauch schrumpft und sich dadurch im Volumen vermindert. Zu diesem Zweck sind bei den Ausführungsbeispielen nach den Figuren 7 und 8 anstelle der oberen Filterbuchse 26 der vorhergehenden Ausführungsbeispiele federbelastete Kolben verwendet, die von oben Druck auf die (nicht gezeigte) Behandlungsmasse in der Patrone ausüben, wobei wenigstens die dabei verwendete Druckfeder, die aus rostfreiem Stahl bestehen muß oder einem anderen korrosionsbeständigen Material bestehen muß und demgemäß teuer ist, Bestandteil des Wandlers ist.

Bei dem Ausführungsbeispiel nach Fig. 7 ist der vorerwähnte Kolben als Topfkolben 94 ausgebildet, dessen Boden als Filter 96 ausgeführt ist. Eine an der Unterseite der horizontalen Wand 62 des Endteils 60 am Kanaleinsatz 50 auf beliebige Weise befestigte Schraubendruckfeder 100 greift in eine Ringnut 98 am Kolbenboden und drückt den mit einem Dichtungsring 102 im Patronenhals 16 dichtend geführten Topfkolben 94 gegen das (nicht gezeigte) Behandlungsmaterial innerhalb der Patrone 12.

Bei der Ausführungsform nach Fig. 8 ist der Ringkolben 94 durch einen mit Schlitzen 104 versehenen Scheibenkolben 106 ersetzt, der mit einem Dichtring 108 dichtend im Patronenhals 16 geführt ist. Eine Schraubendruckfeder 100, die mit ihrem oberen Ende auf geeignete Weise an der im übrigen wie beim Ausführungsbeispiel nach den Figuren 1 bis 5 ausgebildeten horizontalen Wand 62 festgelegt ist, erfaßt beim Einsetzen der Patrone in den Wandhalter die Oberseite des Schreibenkolbens 106 und drückt diesen nach unten auf die (nicht gezeigte) Behandlungsmasse in der Patrone.

**Patentansprüche**

1. Gerät zum Behandeln, insbesondere Enthärten und/oder Vollentsalzen von Wasser im Durchlauf, bestehend aus einem Wandhalter und einer von diesem in aufrechter Stellung, erfaßbaren, mit einer Behandlungsmasse gefüllten Patrone mit einer unteren Anschlußöffnung für die Zuleitung des zu behandelnden Wassers und einer oberen Anschlußöffnung für eine offen endende Abflußleitung, dadurch gekennzeichnet, daß die Abflußleitung wenigstens teilweise von einem Kanal (52, 56, 60, 80) innerhalb des Wandhalters (10) gebildet ist und daß der Wandhalter (10) mechanische Halte- und Dichtungsmittel (44, 76) zur hängenden Halterung der Patrone (12) an deren oberem Ende und zur dichtenden Verbindung der oberen Anschlußöffnung mit dem Kanal (52, 56, 60, 80) im Wandhalter aufweist.

2. Gerät nach Anspruch 1, dadurch gekennzeichnet, daß der Wandhalter (10) als gehäuseartiges Bauteil ausgebildet ist, das sich im wesentlichen oberhalb der Patrone (12) über diese hinweg erstreckt und einen an die Halte- und Dichtungsmittel (44, 76) anschließenden, hauptsächlich horizontalen Kanalabschnitt (56) aufweist, der zu einer nach abwärts gerichteten Ausflußtülle (52) führt.

3. Gerät nach Anspruch 2, dadurch gekennzeichnet, daß der Wandhalter (10) aus Kunststoff besteht.

4. Gerät nach Anspruch 2 oder 3, dadurch gekennzeichnet, daß der hauptsächlich horizontal verlaufende Kanalabschnitt (56) zur Anschlußtülle hin leicht geneigt ist.

5. Gerät nach einem der Ansprüche 2 bis 4, mit einer Leitwertmeßeinrichtung in der Abflußleitung, dadurch gekennzeichnet, daß die Leitwertmeßeinrichtung (84) innerhalb des gehäuseartigen Bauteils angeordnet ist und mit ihrer Elektrode bzw. ihren Elektroden (86) in den hauptsächlich horizontalen Kanalabschnitt (56) ragt.

6. Gerät nach Anspruch 5, dadurch gekennzeichnet, daß der hauptsächlich horizontale Kanalabschnitt (56) stromabwärts von der Elektrode bzw. den Elektroden (86) mit einem Stauorgan (88) versehen ist.

7. Gerät nach einem der vorhergehenden Ansprüche 1, dadurch gekennzeichnet, daß die Halte- und Dichtungsmittel von Elementen (44) eines Schraub- oder Bajonettverschlusses und einem Dichtring (76) gebildet sind, gegen den die obere Öffnungskante (78) der Patrone (12) mit Hilfe des Schraub- bzw. Bajonettverschlusses in dichtende Anlage gelangt.

8. Gerät nach einem der vorhergehenden Ansprüche, dadurch gekennzeichnet, daß der die Abflußleitung blidende Kanal (52, 56, 60, 80) einen durch die obere Anschlußöffnung in die Patrone (12) eintauchenden Rohrstutzen (80) von wesentlich geringerem Außendurchmesser als die Innenweite der Anschlußöffnung der Patrone zur Bildung eines ringförmigen Luftpolsters zwischen seiner Außenseite und der Patronenwandung aufweist.

9. Gerät nach Anspruch 8, dadurch gekennzeichnet, daß an dem Wandhalter (10) eine den Rohrstutzen (80) umschließende Schraubendruckfeder (100, 100') fest angebracht ist, von welcher ein in der Patrone verschieblicher Druckkolben (94, 106) zum Ausgleich der betrieblichen Volumenänderung der Behandlungsmasse belastbar ist.

10. Gerät nach Anspruch 9, dadurch gekennzeichnet, daß der Druckkolben als Topfkolben (94) ausgebildet ist.

11. Gerät nach Anspruch 9, dadurch gekennzeichnet, daß der Druckkolben als Scheibenkolben (106) ausgebildet ist.

12. Gerät nach einem der Ansprüche 1 bis 7, dadurch gekennzeichnet, daß an dem Wandhalter (10) innerhalb der Halte- und Dichtungsmittel (44, 76) ein in die Patrone eintauchender Verdrängungskörper (90) von geringerem Querschnitt als die obere
Anschlußöffnung der Patrone (12) angeordnet ist.


## Claims

1. A device for the continuous flow treatment of water, in particular for the softening and/or complete demineralisation thereof, comprising a wall holder and a cartridge which can be held by the wall holder in an upright position and filled with a treatment substance, and which has a lower connection opening for the inlet of the water to be treated and an upper connection opening for an open-ended outflow conduit, characterised in that the outflow conduit is formed at least partly by a passage (52, 56, 60, 80) inside the wall holder (10), and in that the wall holder (10) has mechanical retaining and sealing means (44, 76) for the suspended mounting of the cartridge (12) at its top end and for effecting a fluid-tight connection of the upper connection opening with the passage (52, 56, 60, 80) in the wall holder.

2. A device according to claim 1, characterised in that the wall holder (10) is in the form of a housing-like structure which extends substantially above and away from the cartridge (12), and has a substantially horizontal passage portion (56) which adjoins the retaining and sealing means (44, 76) and which leads to a downwardly directed outflow nozzle (52).

3. A device according to claim 2, characterised in that the wall holder (10) consists of plastics material.

4. A device according to claim 2 or 3, characterised in that the substantially horizontally extending passage portion (56) is slightly inclined towards the nozzle connection.

5. A device according to any one of claims 2 to 4, having a conductance measuring unit in the outflow conduit, characterised in that the conductance measuring unit (84) is disposed inside the housing-like structure and protrudes with its electrode or electrodes (86) into the substantially horizontal passage portion (56).

6. A device according to claim 5, characterised in that downstream of the electrode or electrodes (86) the substantially horizontal passage portion (56) is provided with a baffle member (88).

7. A device according to any one of the preceding claims, characterised in that the retaining and sealing means comprise elements (44) of a screw or bayonet fastening and a sealing ring (76), against which the upper opening edge (78) of the cartridge (12) is applied in a fluid-tight manner by means of the screw or bayonet fastening.

8. A device according to any one of the preceding claims, characterised in that the passage (52, 56, 60, 80) forming the outflow conduit has a pipe connection (80) which protrudes into the cartridge (12) through the upper connection opening and which is of substantially smaller outer diameter than the internal dimension of the connection opening of the cartridge, so as to form an annular air cushion between its outside and the cartridge wall.

9. A device according to claim 8, characterised in that a helical compression spring (100, 100') surrounding the pipe connection (80) is securely mounted in the wall holder (10) and can apply a load to a piston (94, 106) which is displaceable in the cartridge so as to compensate for operational variations in the volume of the treatment substance.

10. A device according to claim 9, characterised in that the piston is in the form of a skirted piston (94).

11. A device according to claim 9, characterised in that the piston is in the form of a disc piston (106).

12. A device according to any one of claims 1 to 7, characterised in that a displacement member (90), which protrudes into the cartridge and is of smaller cross-section than the upper connection opening of the cartridge (12), is disposed in the wall holder (10) inside the retaining and sealing means (44, 76).


## Revendications

1. Appareil pour le traitement de l'eau, en particulier pour son adoucissement et/ou sa déminéralisation en continu, composé d'un support mural et d'une cartouche pouvant être enserrée par le support en position verticale et remplie d'une substance traitante, comportant un orifice de raccordement inférieur pour une conduite d'arrivée de l'eau à traiter et un orifice de raccordement supérieur pour une conduite d'écoulement à extrémité ouverte, caractérisé par le fait que la conduite d'écoulement est constituée en partie au moins d'un conduit (52, 56, 60, 80) à l'intérieur du support mural (10) et que le support mural (10) présente des moyens mécanique et d'étanchéité (44, 76) pour le maintien en position suspendue de la cartouche (12) à l'extrémité supérieure de celle-ci et pour assurer une liaison étanche de l'orifice de raccordement supérieur avec le conduit (52, 56, 60, 80) contenu dans le support mural.

2. Appareil selon la revendication 1, caractérisé par le fait que le support mural (10) est agencé sous forme de boitier qui se déploie sensiblement au-dessus de la cartouche (12) et comporte une longueur de conduit essentiellement horizontale (56) se raccordant sur les moyens de maintien et d'étanchéité (44, 76) et conduisant à une douille d'écoulement (52) tournée vers le bas.

3. Appareil selon la revendication 2, caractérisé par le fait que le support mural (10) est composé de plastique.

4. Appareil selon les revendications 2 ou 3, caractérisé par le fait que la longueur de conduit essentiellement horizontale (56) est légèrement inclinée en direction de la douille d'écoulement.

5. Appareil selon l'une des revendications 2 à 4, avec un dispositif de mesure de la conductance dans la conduite d'écoulement, caractérisé par le fait que le système de mesure de la conductance (84) est disposé à l'intérieur de l'élément formant boitier et, par son électrode ou ses électrodes (86) fait saillie dans la longueur de conduit essentiellement horizontale (56).

6. Appareil selon la revendication 5, caractérisé par le fait que la longueur de conduite essentiellement horizontale (56) est pourvue d'un organe de retenue en aval de ou des électrodes (86).

7. Appareil selon l'une des revendications précédentes, caractérisé par le fait que les moyens de maintien et d'étanchéité sont composés par les éléments (44) d'une fermeture vissée ou à baionnette et par une bague d'étanchéité (76), contre lesquels porte le bord de l'orifice supérieur (78) de la cartouche (12) en formant un arrangement étanche à l'aide de la fermeture vissée ou à baionnette.

8. Appareil selon l'une des revendications précédentes, caractérisé par le fait que la conduite formant écoulement (52, 56, 60, 80) présente une tubulure (80) plongeant dans la cartouche (80) par l'orifice de raccordement supérieur, dont le diamètre extérieur est sensiblement moindre que le diamètre intérieur de l'orifice de raccordement de la cartouche, en vue de former un coussin d'air annulaire entre son côté extérieur et la paroi de la cartouche.

9. Appareil selon la revendication 8, caractérisé par le fait que l'un des ressorts cylindriques de compression (100, 100') entourant la tubulure (80) est fermement fixé sur le support mural (10) et peut exercer une pression sur un piston de compression (94, 106) se déplaçant dans la douille, pour compenser la variation de volume de la substance traitante en cours de travail.

10. Appareil selon la revendication 9, caractérisé par le fait que le piston de compression est agencé sous forme de piston en pot (94).

11. Appareil selon la revendication 9, caractérisé par le fait que le piston de compression est agencé sous forme de piston-disque (106).

12. Appareil selon l'une des revendications 1 à 7, caractérisé par le fait qu'un corps déplaceur (90) dont la section est inférieure à celle de l'orifice de raccordement supérieur de la cartouche (12) est disposé dans le support mural (10) dans les moyens de maintien et d'étanchéité (44, 76).

Fig.5

Fig.1

Fig. 3

Fig. 2

Fig. 4

Fig. 6

Fig. 7

Fig. 8